Europäisches Patentamt

European Patent Office

Office européen des brevets

(19)

(11) Veröffentlichungsnummer: **0 085 757**
**B1**

(12) # EUROPÄISCHE PATENTSCHRIFT

(45) Veröffentlichungstag der Patentschrift:
**05.02.86**

(51) Int. Cl.⁴: **B 01 D 53/00**

(21) Anmeldenummer: **82110354.6**

(22) Anmeldetag: **10.11.82**

(54) **Verfahren zum Abscheiden gasförmiger, flüchtiger und/oder flüssiger Verunreinigungen aus Abgasen.**

(30) Priorität: **10.02.82 DE 3204597**

(43) Veröffentlichungstag der Anmeldung:
**17.08.83 Patentblatt 83/33**

(45) Bekanntmachung des Hinweises auf die Patenterteilung:
**05.02.86 Patentblatt 86/6**

(84) Benannte Vertragsstaaten:
**BE CH FR GB IT LI NL SE**

(56) Entgegenhaltungen:
**DE - A - 2 445 315**
**DE - A - 2 541 070**
**GB - A - 2 029 227**

(73) Patentinhaber: **Gebrüder Weiss K.G.,
Kupferwerkstrasse, D-6340 Dillenburg Frohnhausen (DE)**

(72) Erfinder: **Kneer, Franz Xaver, Am Honigbaum 6,
D-6345 Eschenburg-Eibelshausen (DE)**

(74) Vertreter: **Puschmann, Heinz H. et al,
Sendlinger-Tor-Platz 11, D-8000 München 2 (DE)**

**Beschreibung**

Die Erfindung bezieht sie auf ein Verfahren Zum Abscheiden gasförmiger, flüchtiger und/oder flüssiger Verunreinigungen aus Abgasen der Tierintensivhaltung, der Tierkörper-Verwertung, der Klär- und Verarbeitungsanlagen der Industrie sowie aus Gär- und Rottevorgängen in Form von Schwefelwasserstoff, Ammoniak, Ammoniumverbindungen, Thiolen oder aliphatischen, cyclo-aliphatischen oder aromatischen Kohlenwasserstoffen, die gegebenenfalls auch halogeniert sein können mit Hilfe eines ein Haufwerk annähernd konstanter Füllhöhe bildenden Adsorbens, dessen Partikel nach Art einer Wanderschicht von oben nach unten durch einen vom Abgas von unten nach oben durchströmten Behälter geführt werden, indem über eine Fördereinrichtung das mittels mechanischer Ein- und Austragsmittel dem Behälter von oben zugeführte und an seiner Sohle abgeführte Adsorbens gegebenenfalls nach Zumischung von frischem Adsorbens dem Behälter von oben wieder zugeführt wird, wobei als Adsorbens ein biologisch hochaktiver, aus einem biologischen Rotteprozeß organischer Abfälle und/oder Klärschlamm gewonnener, zumindest teilweise, aber noch nicht vollständig verrotteter Kompost dient.

Aus der DE-A-24 45 315 ist eine Einrichtung zur Durchführung eines solchen Verfahrens bekannt geworden, die als Adsorbens einen durch Verrotten von organischen Abfällen gewonnenen Kompost verwendet, dessen Verrotten noch nicht vollständig abgeschlossen ist.

Solche als sogenannte Bio-Filter bekanntgewordenen Einrichtungen sind bisher zur Filterung der Abluft von Kompostieranlagen für das Kompostieren von teilweise entwässerten Kommunalschlämmen, also zum Abscheiden organischer Verunreinigungen verwendet worden.

Der Erfindung liegt die Aufgabe zugrunde, solche Bio-Filter derart weiterzubilden, daß sie auch für das Abscheiden von sowohl organischen als auch anorganischen gasförmigen, flüchtigen und/oder flüssigen Verunreinigungen in Form von Schwefelwasserstoff, Ammoniak, Ammoniumverbindungen, Thiolen oder aliphatischen, cycloaliphatischen oder aromatischen Kohlenwasserstoffen, die gegebenenfalls auch halogeniert sein können, insbesondere von Schwefelwasserstoff, Ammoniak, Ammoniumverbindungen und Thiolen, geeignet sind, wie sie in Kläranlagen der Industrie, beispielsweise der chemischen Industrie, wie der Pharmaindustrie und auch bei der Herstellung von Penicillinen und Cephalosporinen, zur Reinigung von deren Abwässern anfallen.

Diese Aufgabe ist gemäß der Erfindung dadurch gelöst, daß der zu verwendende Kompost eine lockere, krümelige Struktur mit einer Porosität von 20 bis 50 %, vorzugsweise 30 bis 40 %, und einen Wassergehalt von 40 bis 60 Gewichtsprozent und dementsprechend einen Trockensubstanzgehalt von 60 bis 40 Gewichtsprozent, einen Gehalt an organischer Substanz von 45 bis 60 Gewichtsprozent, einen pH-Wert (in Wasser) von 6 bis 7,5 mit einem Pilzbesatz aufweist, der wenigstens die Species mucor, einen Bakterienbesatz aus wenigstens der Species actinomycetes, einen Mikrobenbesatz aus wenigstens Milben, Collembolen und Nematoden umfant und daß die dem Behälter an seiner Sohle über ein Rohrleitungssystem mittels eines Druckgebläses zugeführten Abgase nach Durchströmen des Adsorbens über eine Öffnung mittels eines Sauggebläses derart abgesaugt werden, daß ein oberhalb des Haufwerkes entstehendes Vakuum 0,07 bar nicht übersteigt, wobei die Drehzahlen von Saug- und/oder Druckgebläse zum Zwecke der Einstellung der Verweilzeit der zu reinigenden Abgase im Adsorbens derart geregelt werden, daß bei Gasgeschwindigkeiten von 2 bis 15, vorzugsweise 2 bis 10 m/min, Verweilzeiten der Abgase im Adsorbens von mindestens 50 sec auftreten. Weitere Merkmale der Erfinung ergeben sich aus den abhängigen Ansprüchen. Überraschenderweise hat sich nämlich gezeigt, daß die in Industrie-Kläranlagen in großem Maße auftretenden, stark geruchsintensiven Mischgase, die unter anderem Schwefelwasserstoff, Ammoniak, Ammoniumverbindungen und Thiole enthalten, in der Abluft beim Durchströmen des als Absorbens dienenden Haufwerkes aus angerotteten organischen Abfällen annähernd vollständig beseitigt werden.Beim Durchströmen des Haufwerkes werden die dort vorhandenen Bakterien und Mikroben angeregt, erneut tätig zu werden.Hierbei werden unter Verringerung der Substratmenge, also des Haufwerkes,im wesentlichen durch Stoffwechselvorgänge diese Mischgase umgesetzt und abgebaut.

Die bei Verwendung üblicher Adsorbentien, wie Schwelkokse aus Torf- oder Braun-, Stein- oder Holzkohle, nur teilweise Bindung der Mischgase und das schnelle Zusetzen ihrer porösen Oberflächen durch die in den Abgasen befindlichen Schwebstäube entfällt nunmehr völlig. Dies gilt insbesondere für mit Stäuben behafteten Abgasen.

Hierbei werden in vorteilhafter Weise zugleich auch andere umweltbelastende und zum Teil giftige organische gasförmige. flüchtige und/oder flüchtige Bestandteile in hohem Ausmaß abgetrennt, nämlich aliphatische, cycloaliphatische oder aromatische Kohlenwasserstoffe, die gegebenenfalls auch halogeniert sein können. Zu solchen Bestandteilen gehören unter anderem Benzol, Toluol, die verschiedenen Xylole, wie o-. n- oder p-Xylol, die linearen oder verzweigtkettigen gesättigten oder auch ungesättigten Kohlenwasserstoffe. wie 2,4- und 2,5-Dimethylhexan, 2,2,5-Trimethylhexan. n-Nonan, n-Decan. n-Undecan, n-Dodecan, n-Tridecan oder n-Tetradeca, oder auch halogenierte. inabesondere chlorierte. Derivate dieser organischen verbindungen.

Ein weiterer Vorteil ist darin zu sehen, daß das aus dem Behälter ausgetragene Adsorbens als Kompost weiterverwendet werden kann. Das bisher notwendige Endlagern erschöpfter Adsorbentien in besonderen Deponien entfällt ebenfalls. Durch die Verwendung von Druck- und Sauggebläsen kann nicht nur die Strömungsgeschwindigkeit der Abgase durch den Behälter. sondern auch deren partialdruck im Haufwerk geregelt werden. Um einen ungestörten Abbau der Verunreinigungen zu gewährleisten, muß trotz eines gewünachten hohen Durchsatzes der Gasdruck klein bleiben, da die am Abbau beteiligten Mikroben bei hohen Gasdrücken ihre Aktivität einstellen. Über geeignete Regler lassen sich durch Änderung der Förderleistung sowohl von Ein- und Austragsvorrichtung als auch von Druck- und Sauggebläsen die biologischen Ab- und Umbauprozesse den jeweilig anfallenden Adluftmengen sowie ihrer Verunreinigung anpassen. so daß die innerhalb des Adsorbens angesiedelten Mikroorganismen ihre optimalen Lebensbedingungen und somit ihre volle Wirkungsfähigkeit behalten. Weitere Merkmale der Erfindung ergeben sich aus den Unteransprüchen.

Die Erfindung ist anhand einer in der Zeichnung mehr oder minder schematisch dargestellten Filtereinrichtung beschrieben. Es zeigen:

Figur 1 ein Fließschema der ein sogenannten BioFilter bildenden Filtereinrichtung gemäß der Erfindung.

Figur 2 ein die Wirksamkeit der Filtereinrichtung zeigendes Langzeit-Diagramm, bei dem über der Tage darstellenden Zeitachse die $H_2S$ Verunreinigungen des Abgases vor und nach dem Durchatrömen der Filtereinrichtung dargestellt sind, und

Figur 3 ein Langzeit-Diagramm entsprechend Figur 2, bei dem die R-SH-Verunreinigungen des Abgasas vor und nach dem Durchatrömen der Filtereinrichtung dargestellt sind.

In einem Behälter 1, der als zylindrisches, mit einer Isolierschicht versehenes Metallgehäuse ausgebildet ist und auf einem Sockel 2 Steht, vgl. das Fließschema, befindet sich eine biologisch hochaktive Bio-Masse in Form eines Haufwerkea 3 ala Adsorbens. Die Bio-Masse besteht z.B. aus einem durch über die Luftzufuhr gesteuertes Verrotten von organischen Abfällen, zum Beispiel von mit einem Kohlenstoffträger versetzten organischen Klärschlamm oder auch aus Müll gewonnenen, noch nicht vollständig verrotteten Kompost. Nach den Verfahrenamerkmalen der DE-B-25 41 070 ist durch steuerung dieses Verfahrens die dabei gewonnene Bio-Masse so beschaffen, daß hohe biologische Aktivität der Mikroorganismen vorliegt.

Der Behälter 1 weist eine Bodenfläche 4 auf über die sich eine einen gleichmäßigen Austrag ermöglichende Austragsfräse 5 bewegen kann. Die Austragsfräse wird von einem nicht dargestellten Antrieb angetrieben, der um eine Achse beweglich ist, so daß die Austragsfräse sich zusätzlich zu ihrer eigenen Bewegung um ihre in der Zeichenebene liegende Längsachae im Uhrzeigerainne langsam über den Behälterboden bewegen kann. Die Austragsfräse 5 trägt dabei jeweils die unterste Schicht des Haufwerks 3 über eine Offnung 8 am Mittelpunkt der Sohle des Behälters aus. Das ausgebrachte Material fällt auf eine Fördervorrichtung 10, die es in Pfeilrichtung zu eine Mischatelle 11 bringt, der eine Zubringvorrichtung 12 für Frischmaterial und eine Steilfördervorrichtung 13 zugeordne sind. Hierdurch wird die ausgebrachte Bio-Masse gegebenenfalls mit frischer Bio-Masse durchsetzt und von oben he dem Behälter 1 wieder zugeführt. Hier wird es über einen Rundverteiler 15 gleichmäßig in der Behälteröffnung verteil Anfänglich ist selbstverständlich frische Bio-Masse allein zu verwenden.

Über ein schematisch dargestelltes Gebläse 16 und ein Rohrleitungssystem 17 werden die zu reinigenden Abgase oder die zu reinigende Abluft in den unteren Bereich des Behälters. also an seiner Sohle, eingeleitet. Hierzu dient ein Düsensystem 18. Der Behälter 1 ist oben geschlossen. Über eine schematisch dargestellte Abluftleitung 21 und ein ebenfalls schematisch darqestelltes Sauggebläse 22 wird die durch das Haufwerk strömende Abluft abgesaugt. Üer eine an sich bekannte, hier nicht dargestellte Regeleinrichtung wird die Strömungsgeschwindigkeit der Abluft durch das Haufwerk eingestellt. Hierbei ist zu beachten daß trotz eines großen Durchsatzes an zu reinigenden Abgasen der Gasdruck im Behälter klein bleibt; im Idealfalle sollte das Abgas lediglich durch das Haufwerk diffundieren. Als technisch realisierbare Werte haben sich ein Vakuum oberhalb des Haufwerkes von maximal 0,07 bar bei Gasgeschwindigkeiten von 2 bis 15, vorzugsweise 2 bis 10 m/min erwiesen, so daß sich Verweilzeiten der Abgase im Haufwerk von mindestens 50 sec ergeben. Ein höheres Vakuum kann zum gefahrvollen sogenannten Implodieren des Behälters führen.

Die tatsächliche Verweilzeit der Abluft im Haufwerk ergibt sich aus

$$ ta = \frac{A \times h \times P \times 3.600}{V \times 100} = (sec) \qquad (1) $$

wobei

$A$ = Anströmfläche ($m^2$)

$h$ = Füllhöhe ($m$)

$P$ = Porösität (%)

$V$ = eingeblasene Luftmenge pro Stunde ($m^3/h$)

ist.

Da die von der jeweiligen Korngröße des verwendeten Kompostmaterials abhängige Porösität erfahrungsgemäß zwischen 20 und 50 % schwankt, sollte als mittlerer Wert der Porösität ca. 40 % angenommen werden, der dann erfahrungsgemäß durch das Gewicht der Materialsäule im Behälter auf ca. 30 % sinkt.

Die einzuregelnde Luftgeschwindigkeit $V_1$ ergibt sich aus

$$V_1 = \frac{\dot{V} \times 100}{A \times P \times 60} = (m/min) \qquad (2)$$

wobei

$V$ = eingeblasene Luftmenge $(m^3/h)$

$A$ = Anströmfläche $(m^2)$

$P$ = Porösität

ist.

Die von unten her in Pfeilrichtung zugeleiteten, über die Querschnittsfläche gleichmäßig verteilten Abgase müssen das den Behälter von oben nach unten durchwandernde Haufwerk, also das ein Filterbett bildende Adsorbens, durchströmen. Hierbei erfolgt die Reinigung der Abgase durch Adsorption und biologische Umsetzung mit dem Adsorbens. Diese Adsorption und biologische Umsetzung sind biologische Vorgänge. so daß hierbei ein weiterer Rotteprozeß im Haufwerk entsteht, der zu einem Rotteverlust führt. Dieser Rotteverlust bzw. Rotteschwund wird durch Frischmaterialzugabe über die Einbringvorrichtung 12 ständig ersetzt, so daß der Behälter 1 stets vollständig mit Adsorbens gefüllt ist, also stets gleiche Füllhöhe aufweist. Je nach dem Volumen und der Stärke der Abgasverunreinigung wird der Behälter im Um- und/ oder Zulauf langsam oder schneller gefahren, also der Durchsatz an Adsorbens verlangsamt oder beschleunigt. Da die Abgase immer von unten nach oben strömen, wird die unterste Filterschicht immer am stärksten belastet. De aber hier das Austragen des Adsorbens erfolgt und das ausgetragene Material gegebenenfalls mit Frischmaterial durchsetzt wird, kann das entnommene und oben wieder zugeführte Adsorbens bei seinem Weg durch den Behälter regenerieren. Ebenfalls werden hierbei die gegebenenfalls durch staubbehaftete Abgase verdichteten unteren Schichten des Haufwerkes umgewälzt. so daß ein Zusetzen des Adsorbens, wie es bei bekannten Filtern der Fall ist, hier nicht stattfinden kann. Selbstverständlich muß nach einer bestimmten Zeit das Adsorbens vollständig durch neue Bio-Masse ersetzt werden. Das ausgetragene Material ist als Bodenverbesserungsmittel gut geeignet.

Der Behälter 1 kann ein Volumen von etw, 10 bis 200 $m^3$ umfassen. Seine Füllhöhe , also die Höhe des Filterbettes. ist allein von der unteren zulässigen Grenze der Porösität und vom Gewicht des Haufwerkes abhängig. Im vorliegenden Ausführungsbeispiel beträgt z.B. die Füllhöhe ca. 6 m bei einem Heufwerk-Volumen von 100 $m^3$ beträgt dabei die Anströmfläche ca. 15,9 $m^2$. Allgemein gilt. daß das Volumen entsprechend der anfallenden Gasmenge und der Art und Größe der Verunreinigungen zu wählen ist. Dies gilt ebenfalls für den Umfang des Austrags und die Zuführung von frischer Bio-Masse. die gleichfalls von der das Bio-Filter durchsetzenden Gasmenge und der Art und Größe der Verunreinigung abhängen. Grundsätzlich ist es möglich, kein,wenig oder viel frische BioMasse zuzumischen. Über hier nicht dargestellte Meßsonden kann die Wirksamkeit der Filtereinrichtung festgestellt und dementsprechend der Filterprozeß durch Änderung des Durchsatzes an Adsorbens und Zumischung von frischer bio-Masse gesteuert werden. Über die bereits erwähnte Fördervorrichtung 10 kann auch verbrauchte Bio-Masse bei 20 ausgebracht werden.

Da viele Abgase der hier infragestehenden Art 100 % wassergesättigt sind, ist das der beschriebenen Filtereinrichtung zuzuführende Abgas vor der Einspeisung in den Bio-filter über einen Wasserabscheider zu führen.

**Beispiel**

Messungen an einer Industrie-Kläranlage mit Eindicker, Konditionierer und Dekanter.


I


Material und Eigenschaften des als Adsorbens verwendeten Haufwerks


Volumen des Haufwerks des Biofilters = 100 m$^3$

Höhe                                   = 6,3 m

Wassergehalt                           = 63,73 %

organische Substanz (T.S.)             = 69,2 %

pH-Wert (in Wasser)                    = 6,63


Kressetest:

a) Keimung                              98 %

b) Wachstum                             gut

c) Verträglichkeit der Probe
   gegenüber keimender Kresse           voll verträglich


Organoleptische Beurteilung:

Verpilzung                              stark

Struktur                               feinkrümelig

Geruch                                 erdig

Aussehen                               braun


Mikroskopische Untersuchung:

Abbaugrad (Humifizierung) der organischen Substanz
(fluoreszenzmikroskopisch untersucht nach PAULI)

Mittelstarke Eigenfluoreszenz           = mittlerer Abbau

Ammoniakgehalt                         sehr gering

## Mikroorganismen

(Untersuchung erfolgte nach dreitägiger Belüftung)

Bakterien                          Actinomyces farinosus = verbreitet
                                   Actinomyces globisporus
                                   albus                   = häufig
Pilze                              Steriles Mycel          = häufig
Kleintiere                         Milben                  = verbreitet


                    II


## Rohgas

Abluftmenge                = ca. 150 bis 350 $m^3$/h
Lage der Meßstelle         = im senkrechten Abgaskanal vor Eintritt
                             in das Drehkolbengebläse
Durchmesser der Meß-       = 115 mm
stelle
Meßquerschnitt             = 0,0104 $m^2$
Anzahl der Meßachsen       = 2
Anzahl der Meßpunkte je
Meßachse                   = 1

Die Meßstelle entsprach den Maßangaben der Richtlinie VDI 2066.


                    III


## Reingas

Lage der Meßstelle         = im Abgaskamin des Bio-Reaktors
Durchmesser der Meßstelle                     = 190 mm
Meßquerschnitt             = 0,0284 $m^2$
Anzahl der Meßachsen       = 2
Anzahl der Meßpunkte
je Meßachse                = 1

Die Meßstelle entsprach den Maßangaben der Richtlinie VDI 2066.

## Allgemeine Bemerkungen

Im Reingasstrom des Bio-Filters wurde der Schwefelwasserstoff-Anteil entsprechend den Maßgaben der Richtlinie VDI 2454. Blatt 1 (Entwurf) nach dem MolybdänblauSorptionsverfahren quantitativ bestimmt. Die Adsorption der gasförmigen Ammonium-Verbindungen aus dem Roh- und Reingasstrom erfolgte in Waschflaschen-Vorlagen, die mit 0.1 n Schwefelsäure beschickt waren. Die absorbierten Ammonium-Verbindungen wurden photometrisch nach dem Neßler-Verfahren bestimmt.

Die Probegasentnahme zur Ermittlung des Kohlenstoffgehaltes der verbrennbaren organischen Verbindungen aus dem Roh- und Reingasstrom wurde mit einer Sonde aus Quarz durchgeführt.

Die im abgesaugten Proben-Gasstrom enthaltenen organischen Substanzen wurden an dem in Sorptionsrohren aus Quarz befindlichen "Kieselgel E" adsorbiert. Die analytische Bestimmung der adsorbierten organischen Substanzen erfolgte durch Desorption bei erhöhter Temperatur und anschließende Verbrennung im Sauerstoffstrom zu Kohlendioxid. Dieses wurde in eine abgemessene Menge 0,1 n Bariumhydroxidlösung eingeleitet. Die von dem Kohlendioxid nach Abschluß der Desorption nicht verbrauchte Bariumhydroxidlösung wurde durch Titration mit 0.1 n Oxalsäurelösung bestimmt. Diese Arbeitsweise entspricht den Maßgaben der Richtlinie VDI 3481 Blatt 2.

Zur Bestimmung der im Roh- und Reingasstrom des Bioreaktors enthaltenen organischen Verbindungen wurden zusätzliche Abgasproben in Gassammelrohren entnommen und gaschromatographisch in Anlehnung an die Richtlinie VDI 3482. Blatt 2. untersucht.

Die Messungen der Geruchsschwellwerte des Roh- und Reingases mit einem Ölfaktometer - Probenentnahme durch geruchsneutrale Tüten. Messungen gemäß Richtlinie VDI 3881. Blatt 1. unveröffentlichter Entwurf Oktober 1980 - ergeben Verringerungen von beispielsweise 3010 GE im Rohgas auf 497 GE im Reingas.

Aus dem Vorstehenden ergibt sich. daß die zu reinigende Abluft überaus stark mit Schwefelwasserstoff und Thiolen (Mercaptanen) belastet war. Dieser besondere Effekt geht vor allem auch aus den Figuren 2 und 3 der Zeichnung hervor, die eine Auswahl der vorstehend angeführten Meßergebnisse von Langzeitversuchen bei der Reinigung von Schwefelwasserstoff ($H_2S$) und Thiolen (RSH) enthaltendem Rohgas über der Zeitachse aufgetragen zeigen. Das dabei anfallende Reingas enthält die beiden sehr störenden Verunreinigungen nur mehr in äußerst geringer Konzentration. Nach Durchlaufen des Bio-Filters sind diese Gase demnach annähernd vollständig beseitigt. was mit bisher bekannten Filtern nicht erreicht werden konnte.

Nach Einfahren eines solchen Bio-Filters können bei dem als Beispiel angeführten Bio-Filter mit einem FilterbettVolumen von ca. 100 m Abluftmengen bis 1200 $m^3$ pro Stunde gereinigt werden. Die gereinigte Abluft ist ferner praktisch geruchsfrei.

## Patentansprüche

1. Verfahren zum Abscheiden-gasförmiger, flüchtiger und/oder flüssiger Verunreinigungen aus Abgasen der Tierintensivhaltung. der Tierkörper-Verwertung, der Klär- und Verarbeitungsanlagen der Industrie sowie aus Gär- und Rottevorgängen in Form von Schwefelwasserstoff, Ammoniak, Ammoniumverbindungen, Thiolen oder aliphatischen, cyclo-aliphatischen oder aromatischen Kohlenwasserstoffen, die gegebenenfalls auch halogeniert sein können,mit Hilfe eines ein Haufwerk annähernd konstanter Füllhöhe bildenden Adsorbens, dessen Partikel nach Art einer Wanderschicht von oben nach unten durch einen vom Abgas von unten nach oben durchströmten Behälter geführt werden, indem über eine Fördereinrichtung das mittels mechanischer Ein- und Austragsmittel dem Behälter von oben zugeführte und an seiner Sohle abgeführte Adsorbens gegebenenfalls nach Zumischung von frischem Adsorbens dem Behälter von oben wieder zugeführt wird, wobei als Adsorbens ein biologisch hochaktiver, aus einem biologischen Rotteprozeß organischer Abfälle und/oder Klärschlamm gewonnener, zumindest teilweise, aber noch nicht vollständig verrotteter Kompost dient, dadurch gekennzeichnet, daß der Kompost eine lockere, krümelige Struktur mit einer Porosität von 20 bis 50%, vorzugsweise 30 bis 40%, und einen Wassergehalt von 40 bis 60 Gewichtsprozent und dementsprechend einen Trockensubstanzgehalt von 60 bis 40 Gewichtsprozent, einen Gehalt an organischer Substanz von 45 bis 50 Gewichtsprozent, einen pH-Wert (in Wasser) von 6 bis 7,5 mit einem Pilzbesatz aufweist, der wenigstens die Species mucor, einen Bakterienbesatz aus wenigstens der Species actinomycetes, einen Mikrobenbesatz aus wenigstens Milben, Collembolen und Nematoden umfant und daß die dem Behälter an seiner Sohle über ein Rohrleitungssystem mittels eines Druckgebläses zugeführten Abgase nach Durchströmen des Adsorbens über eine Öffnung mittels eines Sauggebläses derart abgesaugt werden, daß ein oberhalb des Haufwerkes entstehendes Vakuum 0,07 bar nicht übersteigt, wobei die Drehzahlen von Saugund/oder Druckgebläse zum Zwecke der Einstellung der Verweilzeit der zu reinigenden Abgase im Adsorbens derart geregelt werden, daß bei Gasgeschwindigkeiten von 2 bis 15, vorzugsweise 2 bis 10 m/min, Verweilzeiten der Abgase im Adsorbens von mindestens 50 sec auftreten.

2. Verfahren nach Anspruch 1, dadurch gekennzeichnet, daß man eine biologisch hochaktive Bio-Masse mit einem Pilzbesatz durch wenigstens einen Vertreter der Mucor species, Micromonospora species, Cephalothezium roseum, Rhizopus nigricans, Thielavia species, Botryosporium species, Trichothecium roseum, Penicillinum species, Leptotrichum glaucum und/oder Aspergillum species, mit einem Bakterienbesatz durch mindestens einen Vertreter der Species Actinomyces farinosus, Actinomyces globisporus albus, Actinomyces flavus oder allgemein Actinomyces species weiß, grau oder grün, und mit einem Mikrobenbesatz durch mindestens eine der Species Milben, Collembolen und/oder Nematoden verwendet.

3. Verwendung des Verfahrens nach einem der vorhergehenden Ansprüche zum Reinigen eines Abgases, das in Kläranlagen der chemischen Industrie, insbesondere der Pharmaindustrie, anfällt.

4. Verwendung des Verfahrens nach einem der vorhergehenden Ansprüche zum Reinigen eines Abgases, das einen hohen Gehalt an Schwefelwasserstoff, Ammoniak, Ammoniumverbindungen und/oder Thiolen aufweist.

## Claims

1 Process for separating gaseous, volatile and/or liquid impurities from waste gases from intense animal farming buildings, animal body utilization plants, industrial sewage and processing plants, as well as fermenting and rotting processes in the form of hydrogen sulphide, ammonia, ammonium compounds, thiols or aliphatic, cycloaliphatic or aromatic hydrocarbons, which can optionally also be halogenated, with the aid of an adsorbent forming a heap of approximately constant filling height, whose particles pass in the manner of a migrating lager from top to bottom through a container through which the waste gas from bottom to top, in that via a conveying mechanism the adsorbent supplied to the container from above by means of mechanical feed-in and discharge means and which is removed at the base and optionally after admixing fresh adsorbent is supplied to the container again from above, the adsorbent being constituted by an at least partly, but not yet completely rotted compost, which is biologically highly active and obtained from a biological rotting process for organic waste and/or sewage sludge, characterized in that the compost has a loose, friable structure with a porosity of 20 to 50%, preferably 30 to 40% and a water content of 40 to 60% by weight and correspondingly a dry substance content of 60 to 40% by weight, a pH-value (in water) of 6 to 7.5 with fungus comprising at least the species Mucorales, bacteria comprising at least the species Actinomycates and microbes comprising at least mites, Collembola and nematodes and that the waste gases supplied to the container at its base by means of a pipe system using a pressure fan after flowing through the adsorbent are sucked out through an opening by means of a suction fan in such a way that a vacuum formed above the heap does not exceed 0.07 bar, the speeds of the suction and/or pressure fan being regulated for the purpose of setting the residence time of the waste gases to be purified in the adsorbent so that in the case of gas velocities of 2 to 5, preferably 2 to 10 m/min, there are residence times of the waste gases in the adsorbent of at least 50 sec.

2 Process according to claim 1, characterized in that use is made of a biologically highly active biomass with fungus constituted by at least one representative of the Mucorales species, Micromonospors species, Cephalothezium roseum, Rhizopus nigricans, Thielavia species, Botryosporium species, Trichothecium roseum, Penicillinum species, Leptotrichum glaucum and/or Aspergillum species, with bacteria constituted by at least one representative of the species Actinomyces farinosus, Actinomyces globisporus albus, Actinomyces flavus or in general Actinomyces white, grey or green and with microbes constituted by at least one of the species mites, Collembola and/or nematodes.

3 Use of the process according to one of the preceding claims for purifying a waste gas obtained in sewate plants of the chemical industry, particularly the pharmaceutical industry.

4 Use of the process according to one of the preceding claims for purifying a waste gas having a high content of hydrogen sulphide, ammonia, ammonium compounds and/or thiols.

## Revendications

1. Procédé pour séparer des impuretés gazeuses, volatiles et/ou liquides des gaz perdus de la production animale intensive, delatransforniation des corps animaux, des stations d'épuration et de transformation de l'industrie, ainsi que des procédés de fermentation et de pourrissage sous forme d'acide sulfhydrique, d'ammoniaque de compositions d'ammonium, de thioles ou d'hydrocarbures aliphatiques, cyclo-aliphatiques ou aromatiques, qui peuvent le cas échéant ètre aussi halogénés, à l'aide d'un adsorbant formant un tas ayant une hauteur de remplissage à peu près constante, les particules de l'adsorbant étant dirigées sous forme d'une couche de migration du haut vers le bas à travers un réservoir traversé par les gaz perdus du bas vers le haut, en réintroduisant de par le haut du réservoir à l'aide d'un dispositif transporteur, le cas échéant après addition d'adsorbant frais, l'adsorbant qui a été introduit par le haut dans le réservoir et en a été sorti à son fond à l'aide de moyens mécaniques d'entrée et de sortie, un composte biologiquement très actif au moins partiellement, mais pas encore complètement pourri , obtenu d'un procédé de pourrissage biologique de déchets organiques et/ou de boue de curage, caractérisé en ce que le composte a une structure meuble grumeleuse d'une porosité de 20 à 50%, de préférence 30 à 40%, et d'une teneur en eau de 40 à 60& en poids et donc une teneur en substance sèche de 60 à 40 pourcent en poids, d'une teneur en substance organique de 45 à 60 pourcent en poids, d'unevaleur pH (dans l'eau) de 6 à 7,5, avec une charge de champignons comprenant au moins le species mucor, une charge de bactéries comprenant au moins le species antinomycète, une charge de microbes contenant au moins des mites, des collemboles et des nématodes, et que les gaz amenés au réservoir à son fond par l'intermédiaire d'un système de tubes aumoyen d'une soufflante sont aspirés, après avoir traversés l'adsorbant, par une ouverture au moyen d'une soufflante aspirante de telle sorte qu'un vide créé audessus du

**0 085 757**

tas ne dépasse pas 0,07 bar, la vitesse de rotation de la soufflante aspirante et/ou de la soufflante étant rég1ée aux fins d'ajuster le temps de séjour dans l'adsorbint des gaz perdus à épurerde telle sorte que pour des vitesses de gaz de 2 à 15, de préférence 2 à 10 m/min, des temps de séjour des gaz perdus dans l'adsorbant d'au moins 50 sec se présentent.

2: Procédé selon la revendication 1, caractérisé en ce que l'on utilise une biomasse biologiquement très active avec une charge de champignons d'au moins une espèce de species mucor, species micromonospora, cephtalothezium tryosporiurm, trichotheciurm roseum, species penicillinurn, leptotrichum glaucum et/ou species aspergillum, avec une charge de bactéries comprenant au moins un représentant de species antinomyces farinosus, antinomyces globisporus albus, antinomyces flavus ou généralement species antinomyces blanc, gris ou vert, et une charge de microbes contenant au moins une des souches mites, collemboles et/ou nématodes.

3. Application du procédé selon l'une des revendications précédentes pour purifier un gaz perdu qui est produit dans des stations d'épuration de l'industrie chimique, en particulier l'industrie pharmaceutique.

4. Utilisation du procédé selon l'une des revendications précédentes pour nettoyer un gaz perdu qui a une teneur élevée en acide sulfhydrique, ammoniaque compositions d'ammonium et/ou de thioles.